# EUROPEAN PATENT APPLICATION

(11) **EP 1 755 052 A2**
(43) Date of publication of application: **21.02.2007**
(21) Application number: 06005884.9
(22) Date of filing: 22.03.2006
(51) Int. Cl.: G06F 17/30

(54) **Manual provision system**

(30) Priority: 08.08.2005 JP 2005229330
(71) Applicant: Yamato Protec Corporation, Osaka 537-0001 (JP)
(72) Inventor: Inui, Masatoshi, Tokyo 108-0071 (JP); Kudo, Ryuji, Kawachi-machi Inashiki Ibaraki 300-1312 (JP); Kikkawa, Akimitsu, Kawachi-machi Inashiki Ibaraki 300-1312 (JP); Sunahara, Hiroyuki, Kawachi-machi Inashiki Ibaraki 300-1312 (JP); Sato, Junya, Tokyo 108-0071 (JP); Nose, Shinji, Tokyo 108-0071 (JP); Sugawara, Masamitsu, Tokyo 108-0071 (JP); Minami, Yoshiaki, Minami-kawachi-gun Osaka 587-0042 (JP)
(74) Representative: Vossius & Partner

(57) **Abstract**

A manual provision system is described, which includes an information terminal device, and a server in which manual information pertaining to an article is recorded, the information terminal device and the server connected to each other through a network, the manual information for the article being scanned into the information terminal device from the server through the network so as to allow the manual information to be checked using the information terminal device. The article is a piece of firefighting equipment and the manual information is a hypothetical operation simulation for the firefighting equipment so as to enable learning the manual information by using the information terminal device to operate the hypothetical operation simulation.

## Description

The present invention relates to a manual provision system able to obtain manual information on articles and services through a network using an information terminal device such as a mobile phone.

Conventionally, as a technology for obtaining article manual information over the Internet, there is a so-called online manual system involving, for example, an instruction manual for an electronic device transmitted over a computer connected to the electronic device and to the Internet from a manual data center connected to the Internet, and displaying the instruction manual on the display part of the electronic device (see JP-A-2003-228451).

In the well-known technology of JP-A-2003-228451, the electronic device is connected to the computer using a USB cable or the like, and the manual information obtained over the Internet using the computer is then displayed on the display part of the electronic device.

Furthermore, there is a manual net information system that involves a system that provides manual information on articles or services and the like in a networked (i.e., Internet-connected) computer environment, in which an information provider is prompted to input standardized specifications, search functions, methods of explanation, methods of operation and the like together with supplier-related information relating to the supplier of articles or services and the like as well as article/service search information composed of article/service-related information and the like concerning the aforementioned articles and services, and provides to an information recipient the above-described standardized manual information from the information provider in a form in which the manual information is searchable based on the aforementioned article/service search information (see JP-A-2001-306585).

In addition, as a technology that enables a user to access a URL (Uniform Resource Locator) home page address appearing in a merchandise catalog or the like automatically, without the need to input the address itself, there is, for example, an article information provision system that, via the Internet, connects, for example, a terminal device having a bar code reader, a server of an article information center that registers URL information corresponding to the bar code information and a server of a manufacturer or a merchandiser that provides article information, wherein the terminal device comprises bar code scanning means for scanning a bar code that identifies an article, means for transmitting bar code information scanned by the bar code scanning means to the article center server, and means for receiving URL information sent from the article information center and displaying the home page of the manufacturer or merchandiser that provides the article, the article information center comprising an information database that registers URL information of the manufacturer or merchandiser corresponding to the bar code information, means for searching the information database based on the bar code information transmitted from the terminal device, and means for transmitting the manufacturer or merchandiser URL information acquired by the searching means to the terminal device, and the manufacturer or merchandiser server comprising means for providing information that explains the company and the company's articles on the home page and means for accepting orders for articles ordered from the home page (see JP-A-2002-108740).

In the well-known technology of JP-A-2002-108740, bar code information from a product catalog or the like is scanned by a bar code scanning means, and based thereon URL information is obtained and the information database searched.

Furthermore, as a technology for using a bar code to display information from manuals provided with products, there is, for example, a method of displaying information that accompanies a product, involving a method of displaying specifications, instruction manual and other accompanying information for the product, in which the information associated with the product is formatted as electronic data, stored in retrievable storage means composed of a memory or a bar code and provided with each such product, the accompanying information to be stored in the storage means being input at appropriate times to an operating means capable of processing information, a sensor that senses conditions of use and data processing means accompanying the product, with useful history information from detection data transmitted by the sensor being processed into files by the data processing means so as to be capable of being inputted to the storage means (see JP-A-2000-276534).

However, where the above-described well-known art is used, although it is possible to access a particular address through a network based on coded information such as a bar code and to scan manual information into an information terminal device and to check that manual information, compared to learning by experience the user finds it difficult to fully understand such manual information simply by reading it and moreover time is required to do so.

Particularly in a case in which the article in question is a piece of firefighting equipment, although it is easy to understand from experience such things as, for example, when using a fire extinguisher, the proper distance from the source of the fire, how to use the fire extinguisher, the proper procedure for putting out a fire and so forth, it is difficult to understand the same things merely by reading a printed manual. In addition, if one uses a fire extinguisher in an attempt to gain experience, that fire extinguisher can no longer be used and must be replenished or replaced with a new fire extinguisher, which is expensive. Consequently, apart from perhaps one representative person actually experiencing working with a fire extinguisher perhaps once a year during a fire drill or the like, it remains virtually impossible to gain actual experience in the use of firefighting equipment. Therefore, when a real fire does occur, it is often the case that effective firefighting is not carried out.

Accordingly, the present invention is conceived in light of the above-described problems of the conventional art, and has as its object to provide a system for providing an instruction manual over a network that enables a user, particularly when the article in question is a piece of firefighting equipment, to perform a hypothetical simulation of the use of such firefighting equipment so as to be able to experience operation of such firefighting equipment without using actual firefighting equipment.

To achieve the above-described object, the present invention provides a manual provision system comprising an information terminal device, and a server in which manual information pertaining to an article is recorded, the information terminal device and the server connected to each other through a network, the manual information for the article being scanned into the information terminal device from the server through the network so as to allow the manual information to be checked using the information terminal device, wherein the article is a piece of firefighting equipment and the manual information is a hypothetical operation simulation for the firefighting equipment so as to enable learning the manual information by using the information terminal device to operate the hypothetical operation simulation.

Preferably, the information terminal device is provided with image sensing means, and the article is provided with coded information containing an Internet address for manual information, the coded information is sensed using the image sensing means, the sensed coded information is processed by the information terminal device and converted into the manual information internet address and the server is accessed based on that internet address.

Preferably, the information terminal device has location information acquisition means and location information obtained by the location information acquisition means is transmitted to the server so that manual information for that location can be specified.

The manual provision system according to the present invention scans manual information from a server on which article manual information is recorded into an information terminal device through a network so as to enable the user to check the manual information using the information terminal device. The article in question is a piece of firefighting equipment, and further, the manual information is a hypothetical operation simulation of the firefighting equipment. The manual provision system according to the present invention enables the user to perform a hypothetical simulation of the use of such firefighting equipment and learn the manual information. As a result, the present invention enables the user easily and by experience to learn how to use the firefighting equipment by hypothetically simulating the operation of the firefighting equipment using the information terminal device even without using actual firefighting equipment.

Other objects, features and advantages of the present invention will be apparent from the following description when taken in conjunction with the accompanying drawings, in which like reference characters designate the same or similar parts throughout the figures thereof.
FIG. 1 is a flow chart illustrating a process from operation to acquisition in a manual provision system according to an embodiment of the present invention;
FIG. 2 is a flow chart illustrating selection of fire extinguishing equipment as firefighting equipment type in the manual provision system;
FIG 3 is a schematic plan view showing a display screen in a case in which a mobile phone is used as an example of an information terminal device in the manual provision system, showing a display screen for selecting items from a mobile manual site;
FIG. 4 is a diagram showing a display screen for selecting items that can be utilized using a simplified manual from the mobile device's manual site;
FIG. 5 is a diagram showing a fire detection display screen of the mobile device's manual site;
FIG. 6 is a diagram showing a display screen for a control panel for firefighting equipment from the mobile device manual site;
FIG. 7 is a diagram showing a display screen indicating a case in which a mistaken firefighting operation has been undertaken in the mobile device manual site;
FIG. 8 is a diagram showing a display screen indicating a case in which a correct firefighting operation has been undertaken in the mobile device manual site; and
FIG. 9 is a flow chart illustrating a case in which manual information is obtained from location information in the manual provision system.

A detailed description will now be given of preferred embodiments of the present invention, with reference to the accompanying drawings.

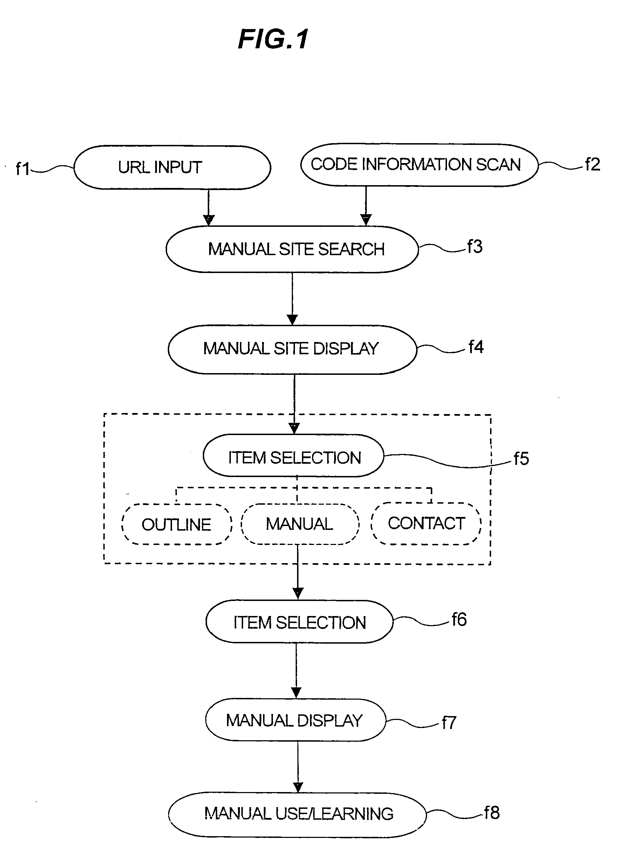

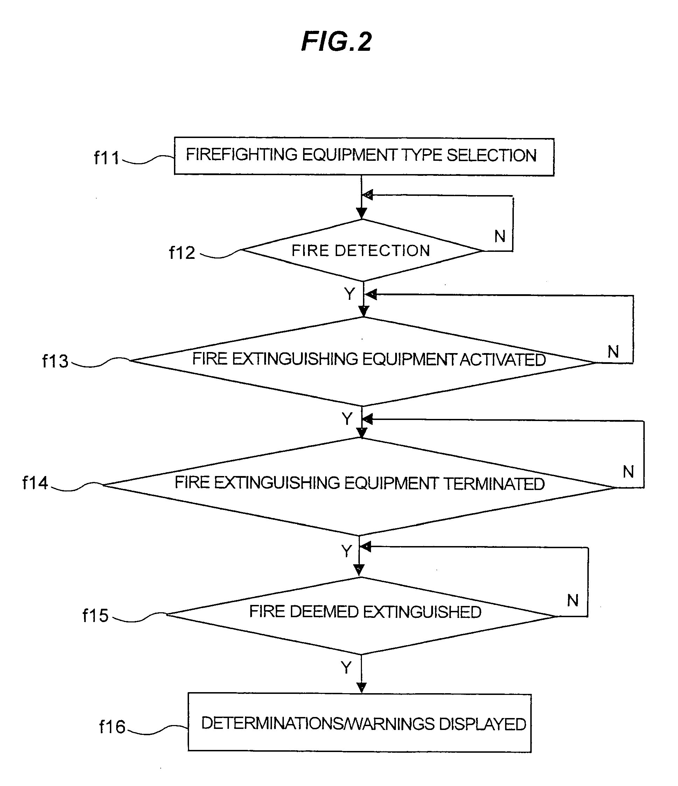

A flow chart illustrating the operation of the manual provision system according to one embodiment of the present invention is shown in FIG. 1 and FIG 2. In the present manual provision system, manual information for a piece of firefighting equipment that is the target article is pre-recorded in a predetermined server and the manual information is then scanned into an information terminal device from such server through a network such as the Internet so as to allow a user (a learner) to check the manual information. It should be noted that, additionally, the manual information pre-recorded in the server may be updated to new information by predetermined means.

A mobile phone, personal computer or the like, for example, may be used as the information terminal device of the present invention. In particular, it is preferable to use an information terminal device such as a mobile phone, a personal computer or the like that is equipped with image sensing means such as a camera or a bar code reader.

In such an information terminal device, the Internet address (URL) of the manual information in the server on the network is input directly using predetermined input means such as a keyboard in step f1 and a search may be made for the manual site in step f3. Alternatively, however, the address of manual information for each piece of, for example, firefighting equipment, may be encoded as coded information such as a two-dimensional bar code, such coded information may be affixed to each piece of firefighting equipment, the coded information may be sensed using the image sensing means provided on the information terminal device, such sensed coded information may be processed by image processing means provided on such information terminal device and converted into the manual information address, and such address may be scanned as the manual information address (URL) in step f2, and based on such address the information terminal device may automatically access the address for the manual information on the server so as to search the manual site in step f3.

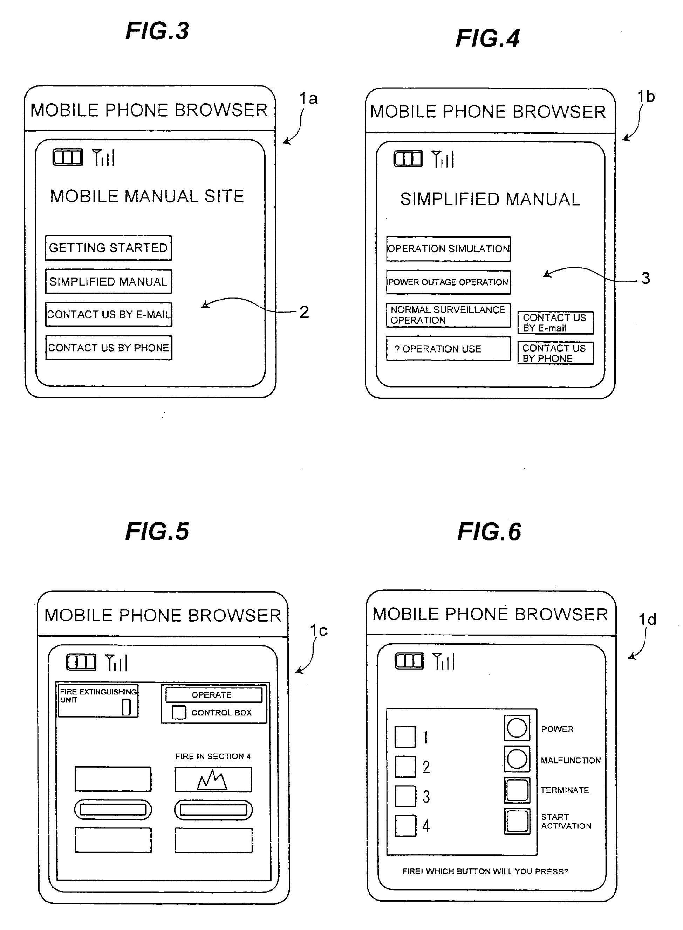

The manual site so searched is displayed in step f4 in a state that enables the user to check the contents of the site using display means provided on the information terminal device. An example of the manual site thus displayed is shown as a sample display screen in FIG. 3, in a case in which a mobile phone is used as the information terminal device.

A display screen 1a of the mobile phone "Simplified Manual" displays such items 2 as, for example, "Getting Started", "Simplified Manual", "Contact Us by E-mail" and "Contact Us by Phone". If, for example, "Getting Started" is selected in step f5, a summary of the mobile manual site is then displayed on the display screen 1a. If "Simplified Manual" is selected in step f5, then items that enable the user to learn the manual are displayed. If "Contact Us by E-mail" is selected in step f5, then an e-mail input screen that allows the user to send an e-mail to a predetermined address is displayed, and if "Contact Us by Phone" is selected in step f5, then a predetermined telephone number is dialed, in either case enabling the user to be automatically connected by e-mail or by telephone, respectively, to a management company or the like.

At this point, if, for example, "Simplified Manual" is selected in step f5, a screen for selecting items 3 that can be utilized with the simplified manual shown in FIG 4 is displayed on a display screen 1 b of the mobile phone. If, for example, an operation simulation item is selected in step f6 from among these items 3 that can be utilized with the simplified manual, then a manual that the user can operate is displayed, enabling the user to run a simulation of the operation of the firefighting equipment hypothetically in accordance with the displayed manual in step f8 and to learn how to use the firefighting equipment.

When performing a hypothetical simulation of the operation of a piece of firefighting equipment and learning how to use such firefighting equipment, in step f11 shown in FIG. 2 the user selects the type of firefighting equipment involved, such as a fire extinguisher or fire extinguishing equipment. FIG 5 shows a sample mobile phone display screen 1c in a case in which the user selects fire-extinguishing equipment for gas stations in step f11. Display screen 1 c shows a screen for reporting a fire in, for example, a sector 4 as fire detection in step f12.

In the fire detection step f12, the screen for reporting the outbreak of a fire continues to be displayed until the user checks. However, once the user checks the fire and performs a predetermined operation, a screen d1 for a control panel for the fire extinguishing equipment is displayed as shown in FIG 6.

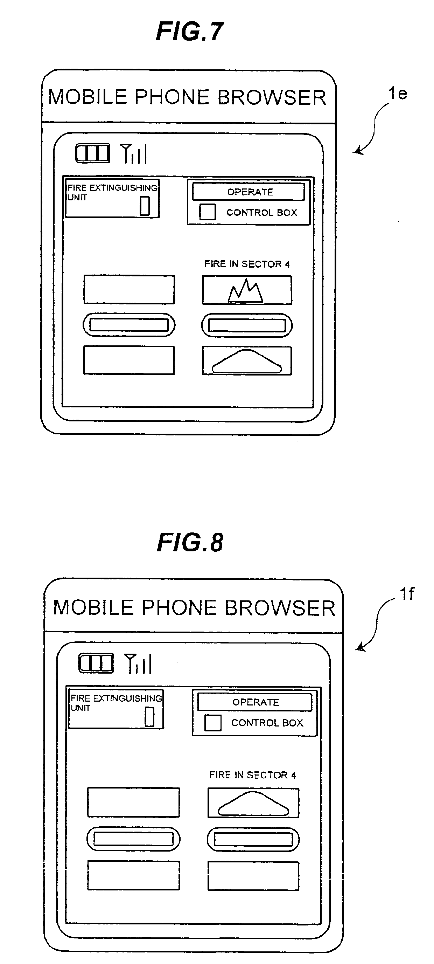

At this point, when the user activates the fire extinguishing equipment in step f13, the user must then select one of the four sectors 1-4. If the user mistakenly selects, for example, sector 2, then as shown in FIG 7 a screen 1e is displayed indicating that a fire extinguishing agent has been laid down in sector 2 but that it is not possible to extinguish the fire in sector 4. If the user correctly selects sector 4, then a screen 1f showing that a fire-extinguishing agent has been laid down in sector 4 and that the fire has been extinguished is displayed as shown in FIG. 8.

When the work of extinguishing the fire is completed, the fire extinguishing equipment is terminated in step f14. In step f15 the fire is deemed extinguished. In addition, determinations and wamings arising within the foregoing series of firefighting operations, such as "Try to detect fires faster" or "It's taking a long time to put out the fire" or "** percent (for example, 90 percent) of the fire has been extinguished" and the like, are displayed.

Thus, as described above, the present invention enables the user to simulate hypothetically the operation of firefighting equipment using the information terminal device and thus learn the manual. As a result, the present invention enables the user to learn easily and through experience how to use the firefighting equipment, without using actual firefighting equipment that cannot be re-used once it has been used completely. Moreover, particularly when using a mobile phone as the information terminal device, the user encounters no restrictions on the time or the place for checking the manual information and learning how to use the equipment, thus facilitating leaming.

It should be noted that, when using a mobile phone information terminal device and checking the manual information to learn how to operate equipment through the manual provision system of the present invention, for example, it is possible to configure the system so that only particular users are permitted to utilize the manual provision system, and therefore the system cannot be used without predetermined software.

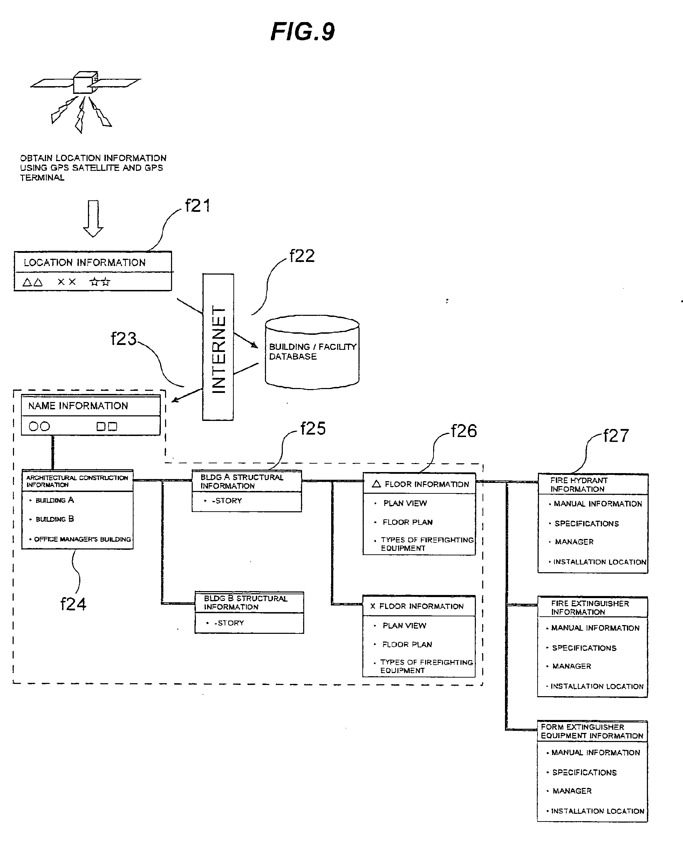

Next, a description will be given of a method of obtaining, from user location information, manual information for a building or the like corresponding to that location information from the server and acquiring manual information. FIG 9 shows a flow chart illustrating steps in the acquisition of manual information for a building corresponding to the location of the user from the user location.

For the method of detecting the location information of the user, a location information acquisition means capable of receiving, for example, a GPS (Global Positioning System) satellite signal and detecting the location of the user may be used, and it is preferable to use a mobile phone equipped with such location information acquisition means for the information terminal device.

Using an information terminal device equipped with such location information acquisition means, user location information is detected using the location information acquisition means in step f21. After the location information is detected, a predetermined server (the manual site) in which manual information is recorded can be accessed from the information terminal device through the Internet, and the detected location information is transmitted to that manual site in step f22.

At the manual site, the manual information recorded in the manual site is searched based on the transmitted location information, and the name of the relevant manual information (a building name or a company name) is transmitted to the information terminal device in step f23. If multiple buildings that are recorded exist in the vicinity of the transmitted location information, there is a possibility that there is an error in the location information detected by the GPS or other such location information acquisition means, and therefore a list of names of such recorded multiple buildings is transmitted to the information terminal device in step f24 and displayed on the display screen of the information terminal device. From that list the user may select the relevant name information in step f25.

In addition, if the building whose name information is selected is a multi-story building, then the relevant floor may be selected in step f26. A plan view and floor plan of the selected floor is then displayed on the display screen of the information terminal device. If the user selects the relevant room in accordance with the display screen, the types of firefighting equipment provided in that room are displayed. The user may then select the firefighting equipment whose operation the user wishes to learn.

If the firefighting equipment the user wishes to learn how to operate is selected in step f27, then manual information for the selected firefighting equipment is displayed on the display screen of the information terminal device. Therefore, the user can specify more specific manual information that moreover is suited to the actual firefighting equipment in the particular building selected by the user, enabling the user to learn the manual information more easily.

As many apparently widely different embodiments of the present invention can be made without departing from the spirit and scope thereof, it is to be understood that the invention is not limited to the specific embodiments thereof except as defined in the appended claims.

## Claims

1. A manual provision system comprising an information terminal device, and a server in which manual information pertaining to an article is recorded, the information terminal device and the server connected to each other through a network, the manual information for the article being scanned into the information terminal device from the server through the network so as to allow the manual information to be checked using the information terminal device, **characterized in that**:
the article is a piece of firefighting equipment and the manual information is a hypothetical operation simulation for the firefighting equipment so as to enable learning the manual information by using the information terminal device to operate the hypothetical operation simulation.

2. A manual provision system according to claim 1, wherein the information terminal device is provided with image sensing means, and the article is provided with coded information containing an internet address for manual information,
the coded information is sensed using the image sensing means, the sensed coded information is processed by the information terminal device and converted into the manual information Internet address and the server is accessed based on that internet address.

3. A manual provision system according to claim 1 or 2, wherein the information terminal device has location information acquisition means and location information obtained by the location information acquisition means is transmitted to the server so that manual information for that location can be specified.

4. The method of obtaining manual information for use in a system according to any of claims 1 to 3.
